# EUROPEAN PATENT APPLICATION

(11) **EP 4 650 953 A1**
(43) Date of publication of application: **19.11.2025**
(21) Application number: 24838314.3
(22) Date of filing: 04.03.2024
(51) Int. Cl.: G06F 9/4401

(54) **ELECTRONIC DEVICE WAKE-UP METHOD AND ELECTRONIC DEVICE**

(30) Priority: 07.07.2023 CN 202310834039
(71) Applicant: Honor Device Co., Ltd., Shenzhen, Guangdong 518040 (CN)
(72) Inventor: XIANG, Chao, Shenzhen, Guangdong 518040 (CN)
(74) Representative: Gill Jennings & Every LLP
(86) International application number: PCT/CN2024/079988
(87) International publication number: WO 2025/011053

(57) **Abstract**

This application discloses an electronic device wake-up method and an electronic device, and relates to the field of electronic technologies, to shorten a startup time in which the electronic device is woken up when the electronic device in a sleep state charges a USB peripheral. The electronic device wake-up method includes: connecting to, by the electronic device, a first USB peripheral through a universal serial bus USB interface, and charging, by the electronic device in a power-on state, the first USB peripheral; keeping charging, by the electronic device in a sleep state, the first USB peripheral; receiving a wake-up operation of a user; starting a BIOS of the electronic device, and during startup of the BIOS, performing no data transmission between the electronic device and the first USB peripheral; connecting to, by the electronic device, a second USB peripheral through the USB interface; skipping charging, by the electronic device in the sleep state, the second USB peripheral; receiving a wake-up operation of the user; and starting the BIOS, and during startup of the BIOS, performing no data transmission between the electronic device and the second USB peripheral.

## Description

This application claims priority to Chinese Patent Application No. 202310834039.2, filed with the China National Intellectual Property Administration on July 7, 2023 and entitled "ELECTRONIC DEVICE WAKE-UP METHOD AND ELECTRONIC DEVICE", which is incorporated herein by reference in its entirety.

### TECHNICAL FIELD

This application relates to the field of electronic technologies, and in particular, to an electronic device wake-up method and an electronic device.

### BACKGROUND

With an increasing demand for mobile office, many notebook computers support a function of charging, in a sleep state (or referred to as a standby state), a mobile phone through a universal serial bus (universal serial bus, USB) interface.

### SUMMARY

Embodiments of this application provide an electronic device wake-up method and an electronic device, to shorten a startup time in which the electronic device is woken up when the electronic device in a sleep state charges a USB peripheral.

To achieve the foregoing objective, the following technical solutions are used in embodiments of this application.

According to a first aspect, an electronic device wake-up method is provided and includes: charging, by an electronic device in a power-on state, a first USB peripheral, where the electronic device is connected to the first USB peripheral through a universal serial bus USB interface; entering, by the electronic device, a sleep state at a first time point, and keeping charging, by the electronic device, the first USB peripheral between the first time point and a second time point; receiving a wake-up operation of a user at the second time point; starting a basic input output system BIOS of the electronic device after the second time point, and during startup of the BIOS, performing no data transmission between the electronic device and the first USB peripheral; disconnecting, by the electronic device, from the first USB peripheral, and connecting to a second USB peripheral through the USB interface, and skipping charging, by the electronic device, the second USB peripheral; entering, by the electronic device, the sleep state at a third time point, and skipping charging, by the electronic device, the second USB peripheral between the third time point and a fourth time point; receiving a wake-up operation of the user at the fourth time point; and starting the BIOS after the fourth time point, and during startup of the BIOS, performing data transmission between the electronic device and the second USB peripheral.

In the electronic device wake-up method provided in embodiments of this application, according to the electronic device wake-up method and the electronic device according to embodiments of this application, if the electronic device is connected to the second USB peripheral through the USB interface (and does not perform charging through the USB interface), regardless of being in the power-on state or in the sleep state, the electronic device does not charge the second USB peripheral. When the electronic device is woken up from the sleep state, during startup of the BIOS, the electronic device performs data transmission (for example, USB initialization signaling transmission) with a USB peripheral, to ensure that after startup of the BIOS is completed, the electronic device can normally communicate with the second USB peripheral. When the electronic device in a power-on state is connected to the first USB peripheral through the USB interface (and can perform charging through the USB interface), the electronic device charges the first USB peripheral. Then the electronic device enters the sleep state, and in the sleep state, continues to charge the first USB peripheral. Because charging of the USB peripheral by the electronic device is not related to a USB communication protocol, when woken up from the sleep state, the electronic device does not perform data transmission with the USB peripheral, to shorten a startup time in which the electronic device is woken up when the electronic device in the sleep state charges the USB peripheral.

In a possible implementation, the method further includes: when the electronic device charges the first USB peripheral, if an embedded controller EC of the electronic device determines that the electronic device meets a sleep condition, setting a sleep charging flag to be valid, where the sleep charging flag indicates whether the electronic device in the sleep state charges a USB peripheral; and in response to the wake-up operation, if the sleep charging flag is set to be valid, sending, by the EC, a first interrupt to the BIOS, where the first interrupt indicates the electronic device to be woken up when the electronic device in the sleep state charges a USB peripheral. The starting a basic input output system BIOS of the electronic device, and during startup of the BIOS, performing no data transmission between the electronic device and the first USB peripheral includes: in response to the first interrupt, starting the BIOS, and during startup of the BIOS, performing no data transmission between the electronic device and the first USB peripheral. In this implementation, an underlying implementation is disclosed, to finally implement no data transmission between the electronic device and the first USB peripheral.

In a possible implementation, the method further includes: if the electronic device in the power-on state charges the first USB peripheral, sending, by the EC, a charging start command to a personal computer PC manager of the electronic device, where the charging start command instructs the electronic device in the power-on state to charge a USB peripheral; and in response to the charging start command, setting, by the PC manager, a power-on charging flag to be valid, where the power-on charging flag indicates whether the electronic device in the power-on state charges a USB peripheral; before the electronic device enters the sleep state, broadcasting, by an operating system of the electronic device, a sleep message; and in response to the sleep message that is broadcast, if the power-on charging flag has been set to be valid, sending, by the PC manager, a sleep charging command to the EC, where the sleep charging command instructs the electronic device in the sleep state to charge a USB peripheral. That the EC determines that the electronic device meets the sleep condition includes: receiving, by the EC, the sleep charging command. This implementation is optional, and when the EC can detect an operation that triggers the electronic device to sleep, this implementation may not be performed.

In a possible implementation, the method further includes: after the electronic device disconnects from the first USB peripheral, sending, by the EC, a charging stop command to the PC manager, where the charging stop command instructs the electronic device in the power-on state to stop charging a USB peripheral; and in response to the charging stop command, setting, by the PC manager, the power-on charging flag to be invalid. Because the electronic device has already stopped charging the USB peripheral in this case, the power-on charging flag is set to be invalid. In this case, the power-on charging flag is consistent with the state of the electronic device.

In a possible implementation, the method further includes: after started, indicating, by the BIOS, the EC to set the sleep charging flag to be invalid. Because the electronic device has already exited the sleep state in this case, the sleep charging flag is set to be invalid, so that the sleep charging flag is consistent with the state of the electronic device, and the EC can reset the sleep charging flag to be valid when the electronic device enters the sleep state next time.

In a possible implementation, an attribute of the USB interface of the electronic device is configured as that a Type C USB interface is connected, at a hardware level, to a central processing unit. In this way, the USB interface of the electronic device supports USB 3.0, to speed up wake-up while not reducing a data transmission rate.

In a possible implementation, the data transmission includes USB initialization signaling transmission, where the USB initialization signaling transmission is used by the electronic device to obtain a type of a USB peripheral and a USB protocol version supported by the USB peripheral. Whether the solutions of this application are used may be determined by detecting whether the USB initialization signaling transmission is performed between the electronic device and the USB peripheral.

According to a second aspect, an electronic device is provided and includes a USB interface, an EC, and a memory. The electronic device in a standby state charges a USB peripheral through the USB interface. The memory stores instructions. When the embedded controller executes the instructions, the electronic device performs the method according to any one of the first aspect and the implementations of the first aspect.

According to a third aspect, a USB peripheral connection system is provided and includes the electronic device according to the second aspect and a USB peripheral. The electronic device in a standby state charges the USB peripheral through the USB interface.

According to a fourth aspect, a computer-readable storage medium is provided and includes instructions. When the instructions are run on an electronic device, the electronic device is enabled to perform the method according to any one of the first aspect and the implementations of the first aspect.

According to a fifth aspect, a computer program product including instructions is provided. When the instructions are run on the foregoing electronic device, the electronic device is enabled to perform the method according to any one of the first aspect and the implementations of the first aspect.

According to a sixth aspect, a chip system is provided. The chip system includes a processor that is configured to support an electronic device in implementing a function in the foregoing first aspect. In a possible design, the apparatus further includes an interface circuit. The interface circuit may be configured to receive a signal from another apparatus (for example, a memory) or send a signal to another apparatus (for example, a communication interface). The chip system may include a chip, and may further include another discrete component.

For technical effects of the second aspect to the sixth aspect, refer to technical effects of any one of the first aspect and the implementations of the first aspect. Details are not described herein again.

### BRIEF DESCRIPTION OF DRAWINGS

FIG. 1 is a schematic diagram of an architecture of a USB peripheral connection system according to an embodiment of this application;
FIG. 2 is a schematic diagram of another architecture of a USB peripheral connection system according to an embodiment of this application;
FIG. 3 is a schematic diagram of a hardware structure of an electronic device according to an embodiment of this application;
FIG. 4 is a schematic diagram of a Type C USB interface according to an embodiment of this application;
FIG. 5 is a schematic diagram of a software and hardware architecture of an electronic device and a corresponding electronic device wake-up method according to an embodiment of this application;
FIG. 6 is a schematic flowchart of a first electronic device wake-up method according to an embodiment of this application;
FIG. 7 is a schematic flowchart of a second electronic device wake-up method according to an embodiment of this application;
FIG. 8 is a schematic flowchart of a third electronic device wake-up method according to an embodiment of this application;
FIG. 9 is a schematic flowchart of a fourth electronic device wake-up method according to an embodiment of this application;
FIG. 10 is a schematic flowchart of a fifth electronic device wake-up method according to an embodiment of this application; and
FIG. 11 is a schematic diagram of a structure of a chip system according to an embodiment of this application.

### DESCRIPTION OF EMBODIMENTS

In embodiments of this application, the terms such as "first" and "second" are merely used to distinguish between features of a same type, and cannot be understood as indicating relative importance, quantity, sequence, and the like.

In embodiments of this application, the terms such as "example" or "for example" are used to represent giving an example, an illustration, or a description. Any embodiment or design scheme described as an "example" or "for example" in this application should not be explained as being more preferred or having more advantages than another embodiment or design scheme. In particular, the use of the terms such as "example" or "for example" is intended to present the related concept in a specific manner.

With an increasing demand for mobile office, heavy used of a mobile phone by many users leads to low battery power. Because it is inconvenient to charge the mobile phone during mobile office, there are many notebook computers support a function of charging a mobile phone through a USB interface in a sleep state, to reduce power consumption of the notebook computers. This function may be referred to as a reverse charging function. In this case, it is assumed that a notebook computer in a sleep state charges a mobile phone, a user clicks a power-on button or operates a keyboard and a mouse, and wakes up the notebook computer, so that the notebook computer enters a power-on state from the sleep state. In this case, because USB peripheral initialization needs to be performed, the notebook computer needs to perform data transmission (for example, USB initialization signaling transmission) with the mobile phone. The USB peripheral initialization mainly includes, for example, obtaining a type of a USB peripheral (where for example, the USB peripheral is an input device, a storage device, or the like) and obtaining a USB protocol version (USB 2.0, USB 3.0, USB 3.2, and a future version) supported by the USB peripheral. A typical input device is a mouse, and a typical storage device is a mobile phone.

However, because there are many types of notebook computers and mobile phones on the market, a USB interface compatibility issue often exists between a mobile phone and a notebook computer that are produced by different manufacturers. This results in a reduction in a data transmission rate between the notebook computer and the mobile phone and an exception in data transmission (for example, USB initialization signaling transmission) between the notebook computer and the mobile phone. For example, an attribute of a USB interface of a notebook computer is configured as USB_TYPEC_PCH (to be specific, a Type C (Type C) USB interface is connected, at a hardware level to a southbridge chip), so that the USB interface of the notebook computer supports only USB 2.0. In addition, an attribute of a USB interface of a mobile phone is configured as USB_TYPEC_CPU (to be specific, a Type C USB interface is connected, at a hardware level, to a CPU), so that the USB interface of the mobile phone supports USB 3.0. Therefore, data transmission is performed between the notebook computer and the mobile phone only according to USB 2.0, resulting in a reduction in a data transmission rate. In addition, the notebook computer and the mobile phone use different USB communication protocols. Consequently, an exception easily occurs during data transmission (for example, USB initialization signaling transmission) between the notebook computer and the mobile phone.

An exception occurred during data transmission (for example, USB initialization signaling transmission) between the notebook computer and the mobile phone leads to a long time in performing a USB peripheral initialization procedure, and even leads to congestion. In addition, when there are a large number of USB peripherals connected to the notebook computer through the USB interface, the USB peripheral initialization procedure takes a longer time (for example, 30 seconds). This causes a user to mistakenly consider that a fault occurs in the notebook computer, reducing use experience of the user.

Embodiments of this application provide an electronic device wake-up method and an electronic device. When the electronic device (for example, a notebook computer) in a power-on state charges a first USB peripheral (a device that can be charged through a USB interface, for example, a mobile phone), an embedded controller (embedded controller, EC) of the electronic device sends a charging start command to a personal computer (personal computer, PC) manager, and the PC manager sets a power-on charging flag to be valid. When a system is to sleep, the PC manager sends a sleep charging command to the EC, and the EC sets a sleep charging flag to be valid. Because charging of a USB peripheral by the electronic device is not related to a type of the USB peripheral or is not related to a USB protocol version supported by the USB peripheral, when detecting a system wake-up event, the EC instructs the BIOS not to perform a USB peripheral initialization procedure, to be specific, not to perform a process of data transmission (for example, USB initialization signaling transmission) between the electronic device and the first USB peripheral. This avoids a problem of an excessively long time in the process of data transmission (for example, the USB initialization signaling transmission), and shortens a startup time in which the electronic device is woken up when the electronic device in the sleep state charges the USB peripheral.

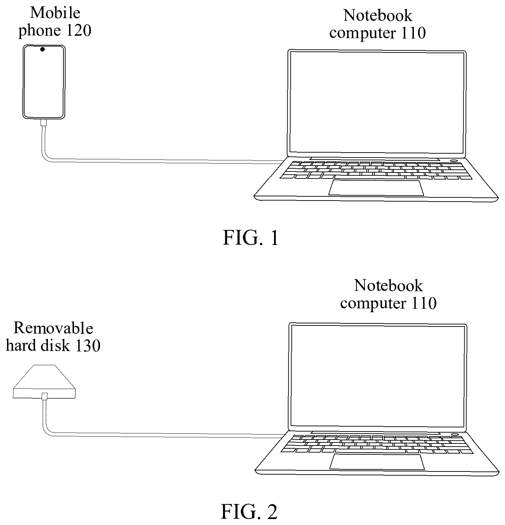

An embodiment of this application provides a USB peripheral connection system. As shown in FIG. 1, the USB peripheral connection system includes an electronic device (for example, a notebook computer 110 shown in FIG. 1) and a first USB peripheral (for example, a mobile phone 120 shown in FIG. 1). Alternatively, as shown in FIG. 2, the USB peripheral connection system includes an electronic device (for example, a notebook computer 110 shown in FIG. 2) and a second USB peripheral (for example, a removable hard disk 130 shown in FIG. 2). The first USB peripheral and the second USB peripheral may be collectively referred to as USB peripherals of the electronic device.

The electronic device may be connected to the first USB peripheral through a USB interface, and the electronic device may charge the first USB peripheral. The electronic device may be connected to the second USB peripheral through the USB interface, and the electronic device does not charge the second USB peripheral. The electronic device is a device that can supply power externally through the USB interface, for example, a computer or a notebook computer. The first USB peripheral is a device that can be charged through the USB interface, for example, a mobile phone, a tablet, a smartwatch, a virtual reality (virtual reality, VR) device, or an augmented reality (augmented reality, AR) device. The second USB peripheral is a device that does not need to be charged through the USB interface, for example, a power adapter, a removable hard disk, a camera, a mouse, or a keyboard.

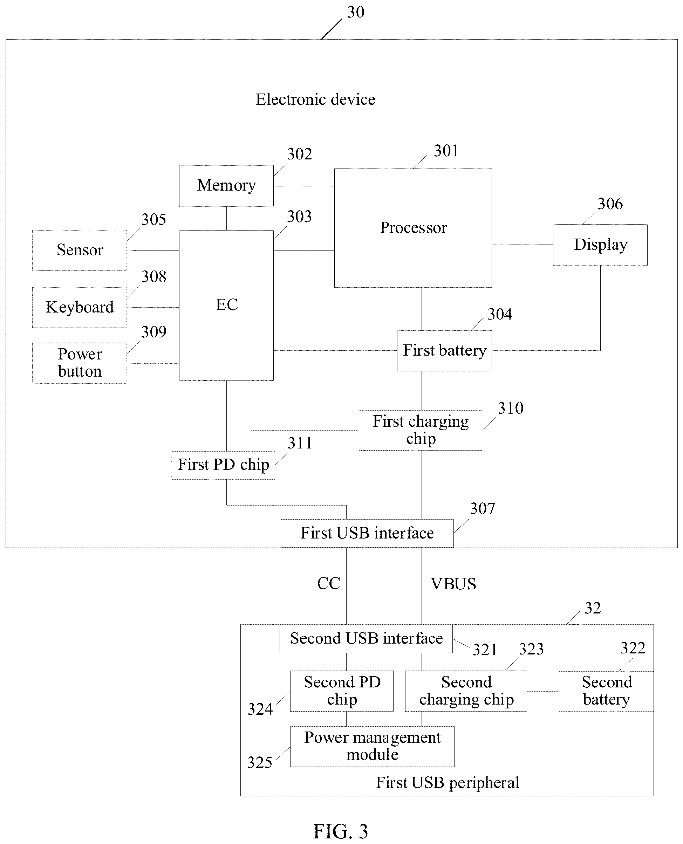

As shown in FIG. 3, an example in which an electronic device 30 is a notebook computer is used. The electronic device 30 includes a processor 301, a memory 302, an EC 303, a first battery 304, a sensor 305, a display 306, a first USB interface 307, a keyboard 308, a power button 309, a first charging chip 310, and a first power delivery (power delivery, PD) chip 311. An example in which a USB peripheral 32 is a mobile phone is used. The USB peripheral 32 includes a second USB interface 321, a second battery 322, a second charging chip 323, a second PD chip 324, and a power management module 325.

The processor 301 may include one or more processing units. For example, the processor 301 may include a field programmable gate (field programmable gate array, FPGA), an application specific integrated circuit (application specific integrated circuit, ASIC), a system on chip (system on chip, SoC), a central processing unit (central processor unit, CPU), a network processor (network processor, NP), a micro controller unit (micro controller unit, MCU), a programmable logic device (programmable logic device, PLD), an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate components, or may be integrated into one or more processors.

The memory 302 may be a volatile memory or a non-volatile memory, or may include both volatile and non-volatile memories. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through illustrative but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). Particularly, the ROM may store a basic input output system (basic input output system, BIOS). The memory 302 may store computer instructions. When the EC 303 executes the computer instructions, the electronic device wake-up method in this application may be implemented.

The display 306 is configured to display an image. When the notebook computer is in a sleep state, the display 306 is turned off, and when the notebook computer is in a power-on state, the display 306 is lighted up.

The EC 303 is a dedicated control chip for a mobile portable application based on an x86 architecture, is mainly used in a mobile computer system and an embedded computer system, and provides such computer systems with a system management function, for example, timing management, thermal management, keyboard management, advanced configuration and power management interface (advanced configuration and power management interface, ACPI) management, and the like for a processor. For example, when used in the notebook computer, the EC 303 may manage operations such as battery charging and discharging, keyboard scanning, cover opening and closing detection (by using the sensor 305), fan control, indicator control, and core data reporting to an operating system. Optionally, the EC 303 may include a flash memory (Flash) with a specific capacity that is configured to store executed computer instructions. When the EC executes the computer instructions, the electronic device wake-up method in this application may be implemented. After the notebook computer is in the sleep state, the EC 303 keeps running, to detect a system wake-up event. If the system wake-up event is detected, the BIOS is woken up, and the BIOS controls the processor to restore a normal operating frequency and powers on a component (for example, a camera and a display screen) that need to operate in an operating state. After the notebook computer is in the power-on state, the EC 303 controls running of a keyboard controller, a mouse, a touchpad, a charging indicator, a fan, and the like.

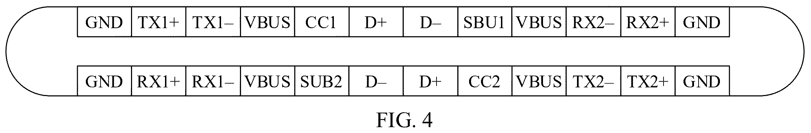

The first USB interface 307 and the second USB interface 321 are both Type C USB interfaces. For example, as shown in FIG. 4, a Type C USB interface includes configuration channel (configuration channel, CC) pins (CC1 and CC2) for configuration communication, transmit pins (TX1+, TX1-, TX2+, and TX2-) and receive pins (RX1+, RX1-, RX2+, and RX2-) for data communication, power pins (VBUS) for power supply, and ground pins (GND). The first PD chip 324 and the second PD chip 324 perform configuration communication through the CC pin (CC1 or CC2), to negotiate supply power, a power supply current, and a power supply voltage of the USB peripheral. The first charging chip 310 supplies power to the second charging chip 323 through the power pin (VBUS), so as to charge the second battery 322.

Attributes of the first USB interface 307 and the second USB interface 321 are both configured as USB_TYPEC_CPU, so that the USB interfaces of the electronic device and the USB peripheral both support USB 3.0. In this way, no USB compatibility issue exists between the electronic device and the USB peripheral, and a data transmission rate between the electronic device and the USB peripheral is not reduced, so that data transmission can still be performed according to USB 3.0.

In addition, the first USB interface 307 is not limited to be singular but may be plural. A USB interface is connected to the first USB peripheral, for example, a mobile phone, and another USB interface may further be configured to be connected to the second USB peripheral, for example, a mouse, a keyboard, or a camera. The sensor 305 may include a Hall sensor, is configured to detect cover opening and closing of the notebook computer, and send information to the EC 303. When the electronic device is in the sleep state, if the EC 303 detects a user operation, for example, clicking the mouse, pressing the keyboard 308, pressing the power button 309, or opening a cover, the electronic device in the sleep state may be woken up.

The first charging chip 310 is controlled by the EC 303, and may charge the first battery 304, or the first battery 304 may be charged externally. The second charging chip 323 is controlled by the power management module 325 and charges the second battery 322.

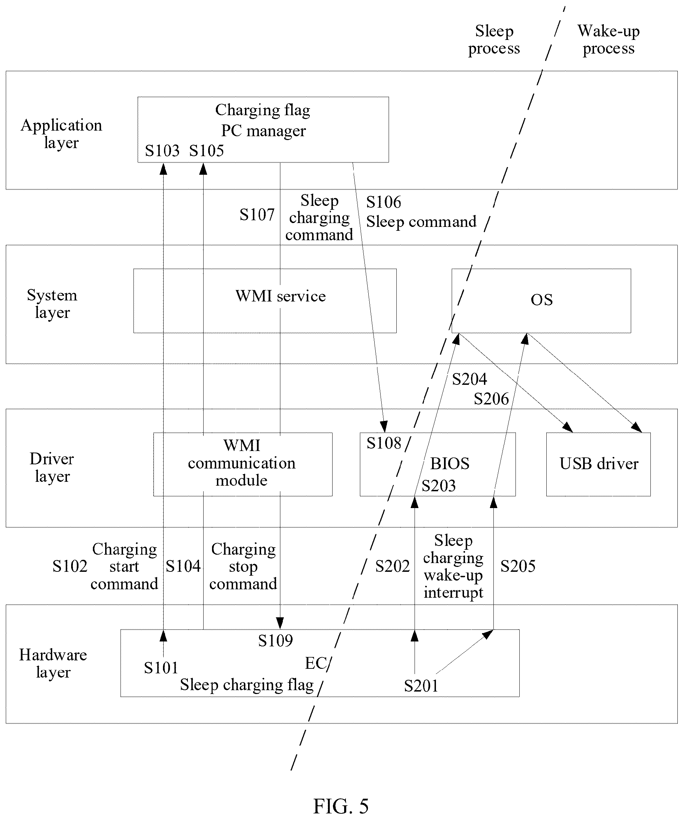

As shown in FIG. 5, a software and hardware architecture of an electronic device includes a hardware layer, a driver layer, a system layer, and an application layer. The hardware layer includes an EC (for a function, refer to descriptions of the EC 303 in FIG. 3). The driver layer includes a windows management instrumentation (windows management instrumentation, WMI) communication module, a BIOS, and a USB driver. The system layer includes a WMI service and an operating system (operation system, OS). The application layer includes a personal computer (personal computer, PC) manager. The PC manager is configured to perform peripheral management, power management, system optimization, garbage removal, and the like. A WMI is an interface provided by a Windows@ operating system to operate or obtain system information. The OS is configured to perform memory management, clock management, thread scheduling, and the like. The PC manager calls the WMI communication module by using the WMI service, to communicate with the EC, for example, to obtain a charging status from the EC and delivering a sleep command to the EC.

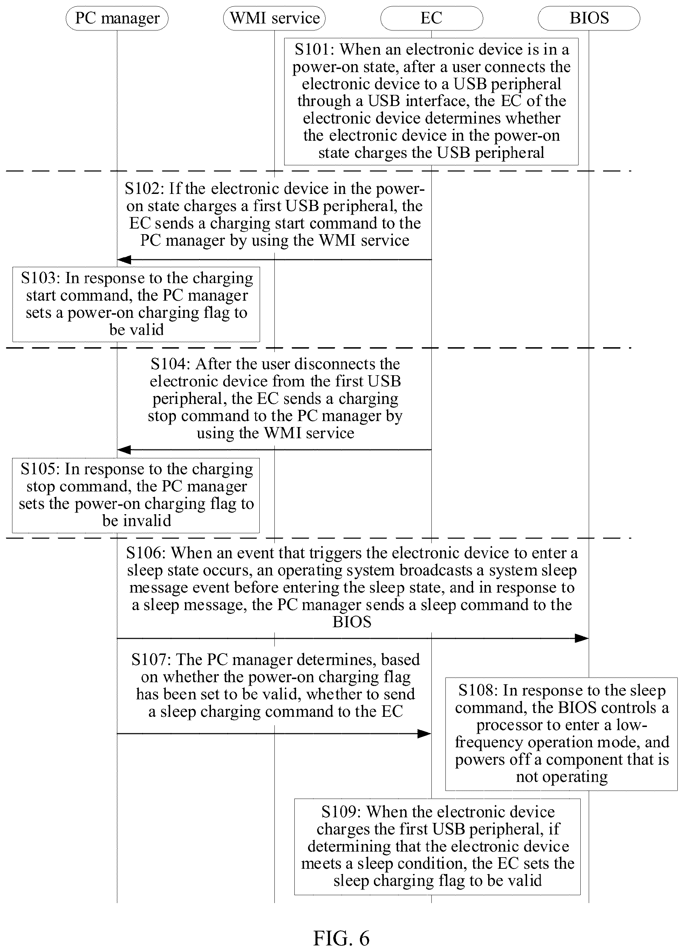

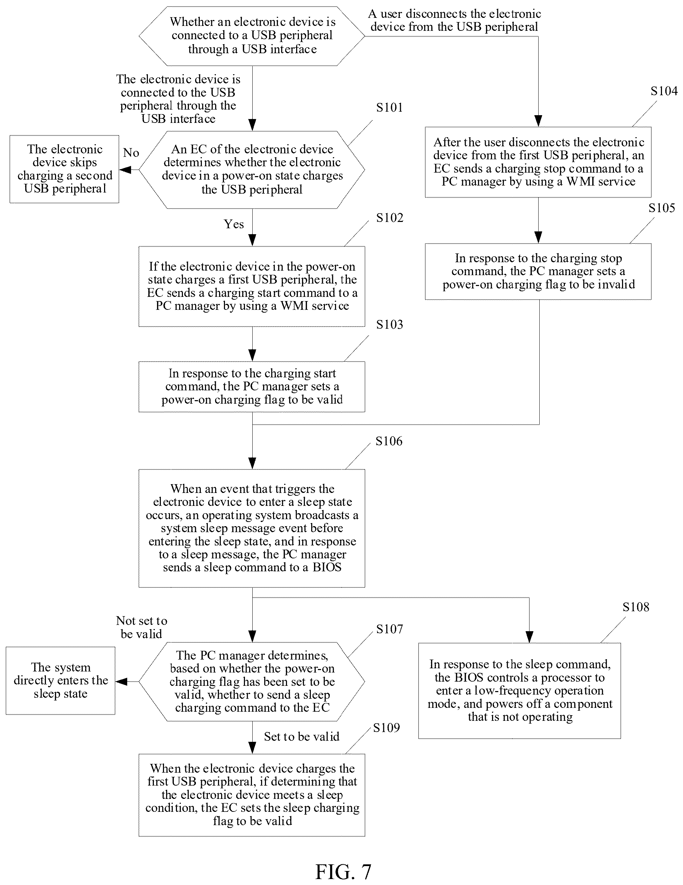

An electronic device wake-up method according to an embodiment of this application includes the following process: In a power-on state, an electronic device (for example, a notebook computer) is connected to a USB peripheral through a USB interface (for example, a mobile phone or a mouse). If the USB peripheral is a first USB peripheral (which can be charged through the USB interface, for example, is a mobile phone), the electronic device charges the first USB peripheral. Then, the electronic device enters a sleep state, and in the sleep state, continues to charge the first USB peripheral. If the USB peripheral is a second USB peripheral (which does not need to be charged through a USB interface, for example, is a mouse), regardless of being in the power-on state or in the sleep state, the electronic device does not charge the second USB peripheral. As shown in FIG. 5 to FIG. 7, the electronic device wake-up method includes S101 to S109. S102 and S103, and S104 and S105 are two parallel branches, and S102 and S103, and S107 are optional steps. FIG. 5 is described from a perspective of interaction between the modules in the software and hardware architecture. FIG. 6 is described from a perspective of interaction between a plurality of modules. FIG. 7 is described from a perspective of an execution sequence.

S101: When an electronic device is in a power-on state, after a user connects the electronic device (for example, a notebook computer) to a USB peripheral through a USB interface, an EC of the electronic device determines whether the electronic device in the power-on state charges the USB peripheral (in other words, determines that the USB peripheral is a first USB peripheral or a second USB peripheral).

As described above, the first USB peripheral is an electronic device that can be charged through the USB interface, for example, a mobile phone, a tablet computer, a smartwatch, a VR device, or an AR device. The second USB peripheral is an electronic device that does not need to be charged through the USB interface, for example, a power adapter, a removable hard disk, a camera, a mouse, or a keyboard.

A first charging chip of the electronic device determines, based on whether there is a voltage drop on a power pin (VBUS) of the USB interface, whether the electronic device is connected to the USB peripheral through the USB interface. If there is no voltage drop on the power pin (VBUS) of the USB interface, it is determined that the electronic device is not connected to the USB peripheral, and if there is a voltage drop on the power pin (VBUS) of the USB interface, it is determined that the electronic device is connected to the USB peripheral. The EC of the electronic device obtains, from the first charging chip, whether the electronic device is connected to the USB peripheral through the USB interface. After the user connects the electronic device to the USB peripheral through the USB interface, there is a voltage drop on the power pin (VBUS) of the USB interface. Therefore, the first charging chip determines that the electronic device is connected to the USB peripheral, so that the EC determines that the electronic device is connected to the USB peripheral.

Then, the electronic device performs USB peripheral initialization. In a USB peripheral initialization procedure, the electronic device performs data transmission (for example, USB initialization signaling transmission) with the USB peripheral through a CC pin of the USB interface, to obtain information (for example, transmitted in a form of a descriptor in a USB communication protocol) about the USB peripheral, for example, obtain a type of the USB peripheral (where for example, the USB peripheral is an input device or a storage device), and obtain a version of the USB protocol (USB 2.0, USB 3.0, and USB 3.2) supported by the USB peripheral. The type of the USB peripheral may be used as a preliminary criterion to determine whether the USB peripheral is the first USB peripheral or the second USB peripheral. For example, a mobile phone is a type of storage devices, so that a USB peripheral of a storage device type may be the first USB peripheral, and the electronic device may charge the first USB peripheral. A USB peripheral of an input device type is the second USB peripheral, for example, a mouse, and the electronic device does not charge the second USB peripheral.

In addition, a first PD chip of the electronic device may communicate with the USB peripheral (specifically, for example, the second PD chip in the mobile phone) through the CC pin of the USB interface, to negotiate supply power of the USB peripheral. The EC of the electronic device may determine, based on the supply power of the USB peripheral, whether the USB peripheral is a power supply party (source) (which is the second USB peripheral) or a power receiving party (sink) (which is the first USB peripheral), in other words, further determine whether the USB peripheral is the first USB peripheral or the second USB peripheral. If the supply power of the USB peripheral (for example, a mobile phone) is less than a power threshold (for example, 15W), it is determined that the USB peripheral is the power receiving party and is the first USB peripheral, and the EC controls the first charging chip to charge the first USB peripheral. Otherwise, if the power supply of the USB peripheral (for example, a power adapter) is greater than or equal to the power threshold (for example, 15W), it is determined that the USB peripheral is the power supply party and is the second USB peripheral, and the EC controls the first charging chip to charge a first battery in the electronic device by using the second USB peripheral.

In conclusion, for the USB peripheral that is first USB peripheral, the electronic device may charge the first USB peripheral, and for the USB peripheral that is the second USB peripheral, the electronic device does not charge the second USB peripheral.

S102: If the electronic device in the power-on state charges the first USB peripheral, the EC sends a charging start command to a PC manager by using a WMI service.

The charging start command is sent in a form of a WMI command, and occupies some reserved fields in the WMI command. The charging start command instructs the electronic device in the power-on state to charge the USB peripheral.

If the EC determines that the electronic device in the power-on state is connected to the second USB peripheral (and does not charge the second USB peripheral), steps S106 to S108 are performed.

S103: In response to the charging start command, the PC manager sets a power-on charging flag to be valid.

The power-on charging flag indicates whether the electronic device in the power-on state charges the USB peripheral. If the electronic device in the power-on state charges the USB peripheral, the power-on charging flag is set to be valid (for example, set to 1). If the electronic device in the power-on state does not charge the USB peripheral, the power-on charging flag is set to be invalid (for example, set to 0). In other words, if the electronic device in the power-on state is connected to the second USB peripheral through the USB interface, the power-on charging flag is not set to be valid. The power-on charging flag may be stored in a register or a flash memory (Flash), and may be stored in a form of a bit or a byte.

S104: After the user disconnects the electronic device from the first USB peripheral, the EC sends a charging stop command to the PC manager by using the WMI service.

The EC detects that the electronic device is disconnected from the first USB peripheral, and there is no voltage drop on the power pin (VBUS) of the USB interface. Therefore, the first charging chip determines that the electronic device is disconnected from the first USB peripheral, so that the EC determines that the electronic device is disconnected from the first USB peripheral. Then, the EC sends the charging stop command to the PC manager by using the WMI service. The charging stop command is sent in a form of a WMI command, and occupies some reserved fields in the WMI command. The charging stop command instructs the electronic device in the power-on state to stop charging the USB peripheral.

S105: In response to the charging stop command, the PC manager sets the power-on charging flag to be invalid.

Because the electronic device has already stopped charging the USB peripheral in this case, the power-on charging flag is set to be invalid. In this case, the power-on charging flag is consistent with the state of the electronic device.

S106: When an event that triggers the electronic device to enter a sleep state occurs, an operating system broadcasts a sleep message before entering the sleep state, and in response to the sleep message, the PC manager sends a sleep command to a BIOS.

The event that triggers the electronic device to enter the sleep state may include any one of the following: The operating system of the electronic device detects that a sleep button displayed on a display is clicked by the user by using a mouse or is tapped by the user through touch; the EC detects that a power button is pressed by the user and notifies the operating system; the EC detects a cover closing operation by using a Hall sensor and notifies the operating system; the EC detects that a time period in which neither a keyboard nor a mouse is operated by the user reaches a threshold and notifies the operating system; and so on.

S107: The PC manager determines, based on whether the power-on charging flag has been set to be valid, whether to send a sleep charging command to the EC.

If the power-on charging flag has been set to be valid, to be specific, the electronic device in the power-on state is connected to the first USB peripheral through the USB interface and is charging the first USB peripheral, the PC manager sends the sleep charging command to the EC by using the WMI service. The sleep charging command is sent in a form of a WMI command, and occupies some reserved fields in the WMI command. The sleep charging command instructs the electronic device in the sleep state to charge the USB peripheral.

If the power-on charging flag is not set to be valid, to be specific, the electronic device in the power-on state is connected to the second USB peripheral through the USB interface or is not connected to a USB peripheral, the PC manager does not send the sleep charging command to the EC, and the system directly enters the sleep state. This can avoid that the PC manager sends the sleep charging command to the EC each time the electronic device is to sleep. In addition, in a scenario in which the electronic device is connected to the second USB peripheral, the electronic device in the sleep state does not charge the second USB peripheral.

It should be noted that steps S102 and S103, and S107 are optional. When the EC can detect a sleep trigger event, for example, the EC detects that the power button is pressed by the user; the EC detects a cover closing operation by using the Hall sensor; or the EC detects that a time period in which neither the keyboard nor the mouse is operated by the user reaches the threshold, steps S102 and S103, and S107 may not be performed.

S108: In response to the sleep command, the BIOS controls a processor to enter a sleep state, and powers off a component that is not operating.

When the processor is in the sleep state, the processor may reduce operating frequency, shut down a thread having high power consumption (for example, a thread for graphics drawing or a thread for voice recognition), and reserve a necessary thread (for example, a main thread and a thread for receiving a wake-up signal from the BIOS). If the processor includes a plurality of cores, the processor may further reserve one core, and shut down the remaining cores. In all of these manners, power consumption of the processor in the sleep state can be reduced.

In the sleep state, the processor also loses control over many components (for example, a camera and a display screen), and in this case, these components actually are not operating normally. If these components continue to be powered, power consumption of the electronic device increases. Therefore, these components that are not operating may be powered off, to reduce power consumption of the electronic device. In this case, the electronic device also enters the sleep state.

S109: When the electronic device charges the first USB peripheral, if determining that the electronic device meets a sleep condition, the EC sets the sleep charging flag to be valid (for example, set to 1).

If steps S102 and S103, and S107 are performed, in response to the sleep charging command from the PC manager, the EC may determine that the electronic device meets the sleep condition. If steps S102 and S103, and S107 are not performed, in the foregoing manner described in S106, if detecting the event that triggers the electronic device to enter the sleep state, the EC may determine that the electronic device meets the sleep condition. For example, the EC detects that the power button is pressed by the user; the EC detects a cover closing operation by using the Hall sensor; and the EC detects that a time period in which neither the keyboard nor the mouse is operated by the user reaches the threshold.

The sleep charging flag indicates whether the electronic device in the sleep state charges the USB peripheral. The sleep charging flag may be stored in the register or the flash memory (Flash), and may be stored in a form of a bit or a byte.

**In** this case, the EC still operates normally, for example, continues to detect whether the power button is pressed by the user, continues to detect whether the mouse or the keyboard is operated by the user, and detects, by using the Hall sensor, whether the user performs a cover opening operation. In addition, the EC still controls the first charging chip to charge the first USB peripheral, so that the electronic device can still in the sleep state the first USB peripheral.

It should be noted that step S108 and step S109 may be performed concurrently without a limitation on an execution sequence.

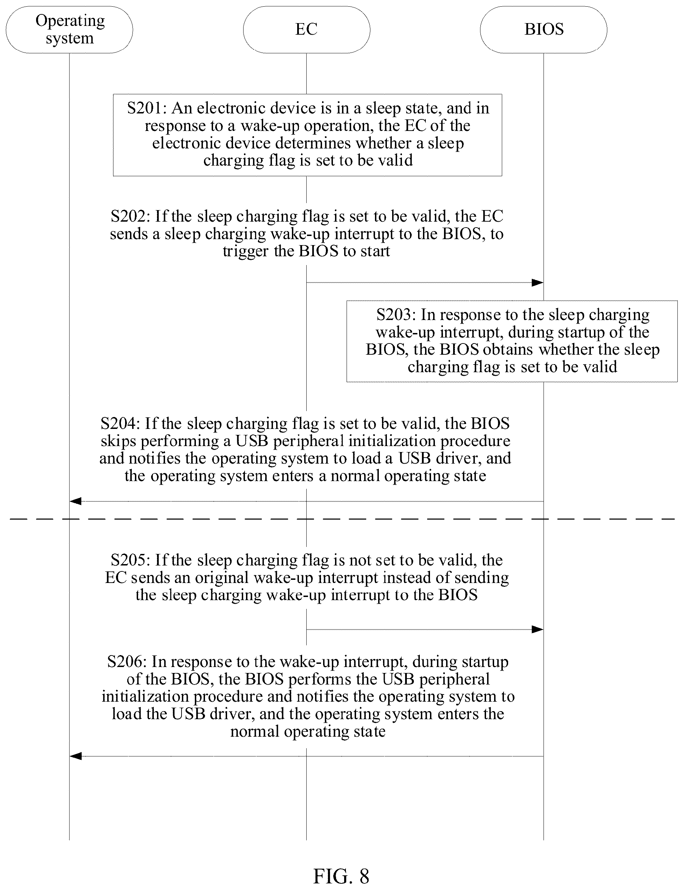

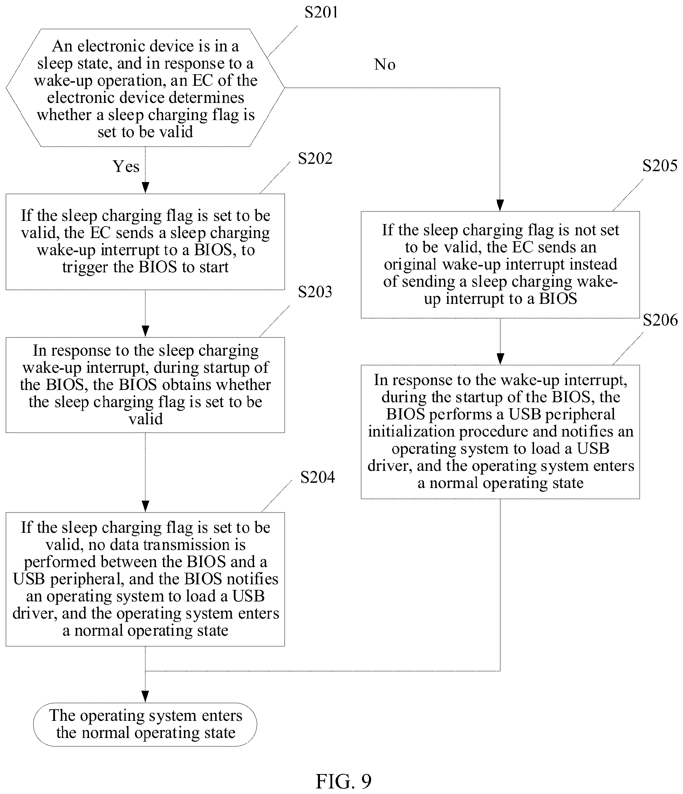

An electronic device wake-up method according to an embodiment of this application further includes the following process: In a sleep state, an electronic device charges a first USB peripheral and is then woken up. As shown in FIG. 5, FIG. 8, and FIG. 9, the electronic device wake-up method includes S201 to S206. S202 to S204, and S205 and S206 are two parallel branches. FIG. 8 is described from a perspective of interaction between a plurality of modules, and FIG. 9 is described from a perspective of an execution sequence. It should be noted that, in embodiments of this application, there is no requirement for a specific execution sequence for steps shown in FIG. 8 and FIG. 9 and the steps shown in FIG. 6 and FIG. 7. The steps shown in FIG. 8 and FIG. 9 may be performed first and then the steps shown in FIG. 6 and FIG. 7 is performed. Alternatively, the steps shown in FIG. 6 and FIG. 7 may be performed first and then the steps shown in FIG. 8 and FIG. 9 is performed.

S201: An electronic device is in a sleep state, and in response to a wake-up operation, an EC of the electronic device determines whether a sleep charging flag is set to be valid.

The wake-up operation may include at least one of the following: A user presses a power button; the user operates a mouse or a keyboard; the user performs a cover opening operation; and so on. To be specific, if the user performs the wake-up operation, the EC determines whether the sleep charging flag is set to be valid; and if the user does not perform a wake-up operation, the electronic device remains in the sleep state. For the sleep charging flag, refer to the descriptions in step S109. Details are not described herein again.

S202: If the sleep charging flag is set to be valid, the EC sends a sleep charging wake-up interrupt to a BIOS, to trigger the BIOS to start.

To be specific, when the electronic device is in the sleep state, the electronic device charges a first USB peripheral, then the electronic device is woken up, and in this case, the EC sends the sleep charging wake-up interrupt to the BIOS, to trigger the BIOS to start. The sleep charging wake-up interrupt indicates the electronic device to be woken up when the electronic device in the sleep state charges the USB peripheral. In other words, the sleep charging wake-up interrupt indicates the BIOS not to perform, during startup, data transmission (for example, USB peripheral initialization transmission) with the USB peripheral. The sleep charging wake-up interrupt may also be referred to as a first interrupt.

During startup of the BIOS, the BIOS controls a processor to restore a normal operating frequency and powers on a component (for example, a camera or a display screen) that needs to operate in an operating state, so that the user can normally use the electronic device. In addition, a start time point and a stop time point of the BIOS are recorded in a log, and whether startup of the BIOS is completed may be determined based on the start time point and the stop time point of the BIOS in the log.

S203: In response to the sleep charging wake-up interrupt, during startup of the BIOS, the BIOS obtains whether the sleep charging flag is set to be valid.

S204: If the sleep charging flag is set to be valid, the BIOS performs no data transmission (for example, USB peripheral initialization transmission) with the USB peripheral and notifies an operating system to load a USB driver, and the operating system enters a normal operating state.

It should be noted that the BIOS may not query whether the sleep charging flag is set to be valid, and may determine, based on the sleep charging wake-up interrupt, not to perform a USB peripheral initialization procedure during startup of the BIOS.

Objectives of USB peripheral initialization include: obtaining a type of the USB peripheral (where for example, the USB peripheral is a mouse, a keyboard, a removable hard disk, or a mobile phone), obtaining a USB protocol version (for example, 2.0, 3.0, or 3.2) supported by the USB peripheral, and the like. Because the electronic device in the sleep state charges the USB peripheral without considering the type of the USB peripheral and the USB protocol version, the BIOS does not perform the USB peripheral initialization procedure, and no data transmission (for example, no USB initialization signaling transmission) is performed between the electronic device and the first USB peripheral. In this case, a subsequent startup procedure is directly performed, to shorten a startup time.

After starting (that is, after being normally woken up), the BIOS may further indicate the EC to set the sleep charging flag to be invalid. Because the electronic device has already exited the sleep state in this case, the sleep charging flag is set to be invalid, so that the sleep charging flag is consistent with the state of the electronic device, and the EC can reset the sleep charging flag to be valid when the electronic device enters the sleep state next time.

After loading the USB driver, the operating system may perform normal data transmission with the USB peripheral.

S205: If the sleep charging flag is not set to be valid, the EC sends an original wake-up interrupt instead of sending the sleep charging wake-up interrupt to the BIOS, to trigger the BIOS to start.

To be specific, when the electronic device is in the sleep state, the electronic device is connected to a second USB peripheral through a USB interface or is not connected to a USB peripheral, then the electronic device is woken up, and in this case, the EC sends the original wake-up interrupt to the BIOS. The original wake-up interrupt indicates the electronic device to be woken up when the electronic device in the sleep state does not charge the USB peripheral. In other words, the sleep charging wake-up interrupt indicates the BIOS to perform, during startup, data transmission (for example, USB peripheral initialization transmission) with the USB peripheral. The original wake-up interrupt may also be referred to as a second interrupt.

S206: In response to the wake-up interrupt, during startup of the BIOS, the BIOS performs the USB peripheral initialization procedure and notifies the operating system to load the USB driver, and the operating system enters the normal operating state.

In this case, during startup of the BIOS, data transmission (for example, the USB initialization signaling transmission) is performed between the electronic device and the second USB peripheral, to obtain the type of the USB peripheral, the USB protocol version supported by the USB peripheral, and the like. The information can help the electronic device correctly perform USB peripheral initialization on the second USB peripheral.

In addition, similar to step S202, during startup of the BIOS, the BIOS controls the processor to restore the normal operating frequency and powers on a component (for example, the camera or the display screen) that needs to operate in an operating state, so that the user can normally use the electronic device. In addition, a start time point and a stop time point of the BIOS are recorded in a log, and whether startup of the BIOS is completed may be determined based on the start time point and the stop time point of the BIOS in the log.

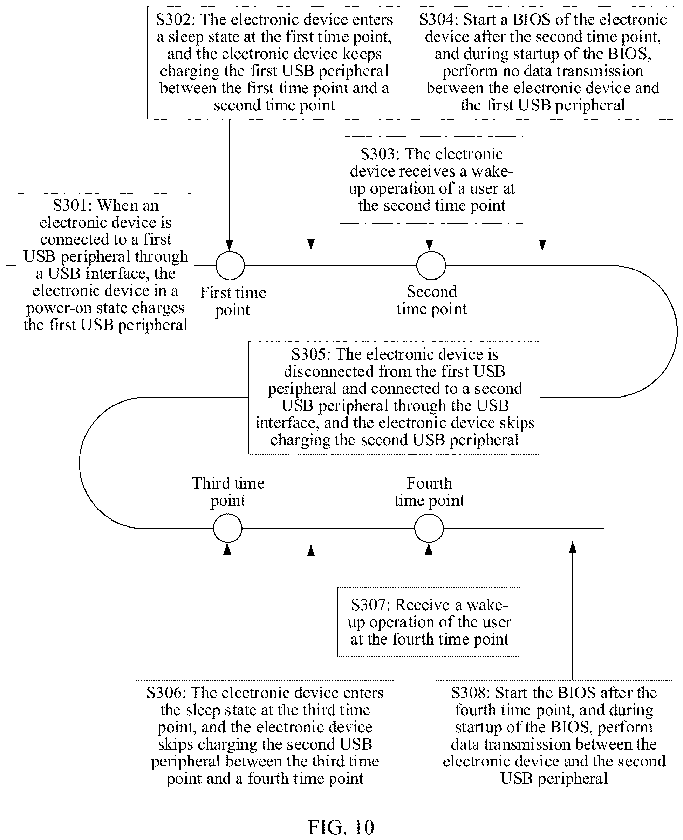

In conclusion, an example in which the electronic device is successively connected to the first USB peripheral (for example, a mobile phone) and the second USB peripheral (for example, a mouse) through a USB device is used to describe a process of waking up the electronic device from sleeping. As shown in FIG. 10, an electronic device wake-up method according to an embodiment of this application includes the following steps.

S301: When an electronic device is connected to a first USB peripheral through a USB interface, the electronic device in a power-on state charges the first USB peripheral.

For this step, refer to steps S101 to S103. Details are not described herein again.

S302: The electronic device enters a sleep state at a first time point, and the electronic device keeps charging the first USB peripheral between the first time point and a second time point.

For this step, refer to steps S106 to S109. Details are not described herein again.

S303: The electronic device receives a wake-up operation of a user at the second time point.

For this step, refer to step S201. Details are not described herein again.

S304: Start a basic input output system BIOS of the electronic device after the second time point, and during startup of the BIOS, perform no data transmission between the electronic device and first USB peripheral.

For this step, refer to steps S202 to S204. Details are not described herein again.

S305: The electronic device is disconnected from the first USB peripheral and connected to a second USB peripheral through the USB interface, and the electronic device skips charging the second USB peripheral.

For specific content that the electronic device is disconnected from the first USB peripheral, refer to steps S104 and S105. For specific content that the electronic device is connected to the second USB peripheral through the USB interface and skips charging the second USB peripheral, refer to steps S101 and S106 to S108. Details are not described herein again.

S306: The electronic device enters the sleep state at a third time point, and the electronic device skips charging the second USB peripheral between the third time point and a fourth time point.

For this step, refer to steps S106 to S108. Details are not described herein again.

S307: Receive a wake-up operation of the user at the fourth time point.

For this step, refer to step S201. Details are not described herein again.

S308: Start the BIOS after the fourth time point, and during startup of the BIOS, perform data transmission between the electronic device and the second USB peripheral.

For this step, refer to steps S205 and S206. Details are not described herein again.

According to the electronic device wake-up method and the electronic device according to embodiments of this application, if the electronic device is connected to the second USB peripheral through the USB interface (and does not perform charging through the USB interface), regardless of being in the power-on state or in the sleep state, the electronic device does not charge the second USB peripheral. When the electronic device is woken up from the sleep state, during startup of the BIOS, the electronic device performs data transmission (for example, USB initialization signaling transmission) with the USB peripheral, to ensure that after startup of the BIOS is completed, the electronic device can normally communicate with the second USB peripheral. When the electronic device in the power-on state is connected to the first USB peripheral through the USB interface (and can perform charging through the USB interface), the electronic device charges the first USB peripheral. Then the electronic device enters the sleep state, and in the sleep state, continues to charge the first USB peripheral. Because charging of the USB peripheral by the electronic device is not related to a USB communication protocol, when woken up from the sleep state, the electronic device does not perform data transmission with the USB peripheral, to shorten a startup time in which the electronic device is woken up when the electronic device in the sleep state charges the USB peripheral.

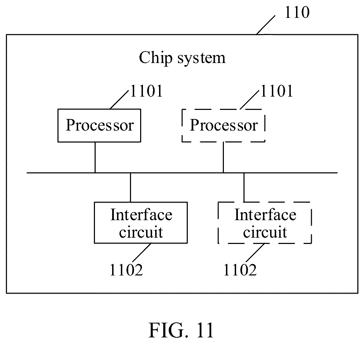

As shown in FIG. 11, an embodiment of this application further provides a chip system. The chip system 110 includes at least one processor 1101 and at least one interface circuit 1102. The at least one processor 1101 and the at least one interface circuit 1102 may be connected to each other through a line. The processor 1101 is configured to support an electronic device to implement steps in the foregoing method embodiments, for example, the methods shown in FIG. 6 to FIG. 10. The at least one interface circuit 1102 may be configured to receive a signal from another apparatus (for example, a memory) or send a signal to another apparatus (for example, a communication interface). The chip system may include a chip, and may further include another discrete component.

An embodiment of this application further provides a computer-readable storage medium. The computer-readable storage medium includes instructions. When the instructions are run on the foregoing electronic device, the electronic device is enabled to perform steps in the foregoing method embodiments, for example, to perform the methods shown in FIG. 6 to FIG. 10.

An embodiment of this application further provides a computer program product including constructions. When the constructions are run on the foregoing electronic device, the electronic device is enabled to perform steps in the foregoing method embodiments, for example, to perform the methods shown in FIG. 6 to FIG. 10.

For technical effects of the chip system, the computer-readable storage medium, and the computer program product, refer to technical effects of the foregoing method embodiments.

It should be understood that, in embodiments of this application, sequence numbers of the foregoing processes do not mean an execution sequence. The execution sequence of the processes should be determined based on functions and internal logic of the processes, and should not constitute any limitation on the implementation processes of embodiments of this application.

A person of ordinary skill in the art may be aware that, the example modules and algorithm steps described with reference to embodiments disclosed in this specification can be implemented by electronic hardware or a combination of computer software and electronic hardware. Whether the functions are executed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for tease and brevity of description, for a detailed working process of the foregoing system, apparatus, and module, refer to a corresponding process in the foregoing method embodiments. Details are not described herein again.

In the several embodiments provided in this application, it should be understood that the disclosed system, device, and method may be implemented in other manners. For example, the described device embodiments are merely examples. For example, division into the modules is merely logical function division and may be other division during actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between devices or modules may be implemented in an electronic form, a mechanical form, or another form.

The modules described as separate parts may or may not be physically separate, and parts displayed as modules may or may not be physical modules, to be specific, may be located in one device, or may be distributed on a plurality of device. Some or all of the modules may be selected according to actual needs to achieve the objectives of the solutions of embodiments.

In addition, functional modules in embodiments of this application may be integrated into one device, or each of the modules may exist alone physically, or two or more modules may be integrated into one device.

All or some of the foregoing embodiments may be implemented by software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic device wake-up method, comprising:
charging, by an electronic device in a power-on state, a first universal serial bus USB peripheral, wherein the electronic device is connected to the first USB peripheral through a universal serial bus USB interface;
entering, by the electronic device, a sleep state at a first time point, and keeping charging, by the electronic device, the first USB peripheral between the first time point and a second time point;
receiving a wake-up operation of a user at the second time point;
starting a basic input output system BIOS of the electronic device after the second time point, and during startup of the BIOS, performing no data transmission between the electronic device and the first USB peripheral;
disconnecting, by the electronic device, from the first USB peripheral, and connecting to a second USB peripheral through the USB interface, and skipping charging, by the electronic device, the second USB peripheral;
entering, by the electronic device, the sleep state at a third time point, and skipping charging, by the electronic device, the second USB peripheral between the third time point and a fourth time point;
receiving a wake-up operation of the user at the fourth time point; and
starting the BIOS after the fourth time point, and during startup of the BIOS, performing data transmission between the electronic device and the second USB peripheral.

2. The method according to claim 1, wherein
the method further comprises:
when the electronic device charges the first USB peripheral, if an embedded controller EC of the electronic device determines that the electronic device meets a sleep condition, setting a sleep charging flag to be valid, wherein the sleep charging flag indicates whether the electronic device in the sleep state charges a USB peripheral; and
in response to the wake-up operation, if the sleep charging flag is set to be valid, sending, by the EC, a first interrupt to the BIOS, wherein the first interrupt indicates the electronic device to be woken up when the electronic device in the sleep state charges a USB peripheral; and
the starting a basic input output system BIOS of the electronic device, and during startup of the BIOS, performing no data transmission between the electronic device and the first USB peripheral comprises:
in response to the first interrupt, starting the BIOS, and during startup of the BIOS, performing no data transmission between the electronic device and the first USB peripheral.

3. The method according to claim 2, wherein
the method further comprises:
if the electronic device in the power-on state charges the first USB peripheral, sending, by the EC, a charging start command to a personal computer PC manager of the electronic device, wherein the charging start command instructs the electronic device in the power-on state to charge a USB peripheral;
in response to the charging start command, setting, by the PC manager, a power-on charging flag to be valid, wherein the power-on charging flag indicates whether the electronic device in the power-on state charges a USB peripheral;
before the electronic device enters the sleep state, broadcasting, by an operating system of the electronic device, a sleep message; and
in response to the sleep message that is broadcast, if the power-on charging flag has been set to be valid, sending, by the PC manager, a sleep charging command to the EC, wherein the sleep charging command instructs the electronic device in the sleep state to charge a USB peripheral; and
that the EC determines that the electronic device meets the sleep condition comprises:
receiving, by the EC, the sleep charging command.

4. The method according to claim 3, wherein the method further comprises:
after the electronic device disconnects from the first USB peripheral, sending, by the EC, a charging stop command to the PC manager, wherein the charging stop command instructs the electronic device in the power-on state to stop charging a USB peripheral; and
in response to the charging stop command, setting, by the PC manager, the power-on charging flag to be invalid.

5. The method according to any one of claims 2 to 4, wherein the method further comprises:
after started, indicating, by the BIOS, the EC to set the sleep charging flag to be invalid.

6. The method according to any one of claims 1 to 5, wherein an attribute of the USB interface of the electronic device is configured as that a Type C USB interface is connected, at a hardware level, to a central processing unit.

7. The method according to any one of claims 1 to 6, wherein the data transmission comprises USB initialization signaling transmission, wherein the USB initialization signaling transmission is used by the electronic device to obtain a type of a USB peripheral and a USB protocol version supported by the USB peripheral.

8. An electronic device, comprising a universal serial bus USB interface, an embedded controller EC, and a memory, wherein the electronic device in a standby state charges a USB peripheral through the USB interface, the memory stores instructions, and when the embedded controller executes the instructions, the electronic device performs the method according to any one of claims 1 to 7.

9. A computer-readable storage medium, comprising instructions, wherein when the instructions are run on an electronic device, the electronic device performs the method according to any one of claims 1 to 7.

10. A universal serial bus USB peripheral connection system, comprising the electronic device according to claim 8 and a universal serial bus USB peripheral, wherein the electronic device in a sleep state charges the USB peripheral through the USB interface.
